# EUROPEAN PATENT SPECIFICATION

(11) **EP 0 688 929 B1**
(45) Date of publication and mention of the grant of the patent: **13.10.2004**
(21) Application number: 95304357.7
(22) Date of filing: 21.06.1995
(51) Int. Cl.: E05B 49/00, H04L 9/08

(54) **Secure self-learning**
Geschütztes Selbstlernen
Auto-apprentissage protégé

(30) Priority: 21.06.1994 ZA 9404411
(43) Date of publication of application: 27.12.1995
(73) Proprietor: MICROCHIP TECHNOLOGY INC., Chandler, AZ 85244 (US)
(72) Inventor: Bruwer, Frederick Johannes, Montana, Pretoria (ZA)
(74) Representative: Patry, Didier Marcel Pierre

(56) References cited:
- EP-A- 0 244 332
- EP-A- 0 459 781
- US-A- 5 191 610

## Description

### BACKGROUND OF THE INVENTION

This invention relates generally to the remote control of devices and to security systems and, more particularly, to a secure learning system and method.

The remote control of systems or devices via ultrasonic, radio frequency or infra red transducers is popular for many applications, including security systems for buildings and vehicles, and remote controlled garage door and gate openers.

Certain unidirectional transmission systems currently in use have two very important security shortcomings:
(a) the codes they transmit are usually fixed; and
(b) the number of possible code combinations is relatively small. Either of these shortcomings can lead to unauthorised access.

The limited number of possible combinations available in most remote control systems makes it possible to transmit all possible combinations in a relatively short time. A hand held microprocessor-based system for this purpose (called a code scanner) can easily be constructed.

In systems using eight DIP switches (256 combinations), this scanning process can typically be accomplished in less than 32 seconds, when trying eight combinations per second. Even in systems using 16 bit keys, yielding 65 536 combinations, only 2¼ hours would be required to try all possible combinations. It should also be noted that the scanner may gain access in far less than this maximum time - the average time would in fact be half of the total time.

An easier way of gaining unauthorised access to a security system is freely available. A unit of this type is advertised as a tool for the "legal repossession of vehicles".

A remote control transmitter of the type normally used in vehicle security and remote control systems includes a small radio transmitter that transmits a code number on a specific frequency. This code number is normally generated by an integrated circuit encoder. The transmission frequency is usually fixed by legislation within a particular country. Thus it is possible to build a receiver that can receive signals from all such transmitters and to use this together with a circuit which records the transmissions captured by the receiver. Such a device is known as a code or key grabber and can be used to gain access to protected premises or to vehicles with remote control security systems.

Code hopping and rolling code systems are currently available to overcome the limitations of fixed code systems (refer to ZA Patent No.91/4063 and US Patent No.5,103,221). The specifications of these patents describe transmitters which use algorithms to generate a different transmission each time the transmitter is activated. When a code is received and decoded, a decoder responds only if a valid transmission was made. In some cases (refer to ZA Patent No.91/4063) a special algorithm is used with a stored key to decode an encoded reception. The decoded value is then compared to a stored value to determine if the transmission is legitimate or not.

A disadvantage of code hopping and rolling code systems is the fact that it is difficult to replace or disable lost, stolen or unserviceable transmitters. External equipment is used by a manufacturer or dealer to reprogram and replace a transmitter. An additional security problem may be created during this process.

Ideally a security system should not require dealer intervention when a user needs to add a new transmitter to the system or replace a transmitter. The user should be able to buy a generic replacement transmitter off the shelf and add this transmitter unassisted when convenient. Learning systems provide this capability, in that the decoder can "learn" the new transmitter's identity without having to be reprogrammed from outside using special equipment.

A learning system should however not only enable a user to add a new transmitter to the system, but should also have a means of excluding a previous transmitter from the system, due to the possibility of such a transmitter falling into the wrong hands.

In learning fixed code systems, the incoming code is stored for future reference by the decoder when it is in a learning mode. Subsequent transmissions are compared with the learned code. Different arrangements to learn new transmitter codes are used. A switch can be used to set the decoder either in a normal operation mode or in a learning mode (US Patents Nos.4,750,118 and 4,912,463). In the learning mode, the decoder can learn new valid codes from a transmitter. Similar means is used (refer to US Patents Nos.4,931,789 and 5,049,867) to program the decoders to react to a new transmitter code. In another invention (refer to US Patent No.5,148,159), a randomly selected fixed code is generated by the decoder and programmed into the associated transmitter. US Patent No.4,855,713 describes the use of a hand-held programmer to program the new fixed code to be recognised by the decoder. In all of these cases, the transmitted or programmed codes are fixed stored codes. Security threats by means of code grabbing or code generation still exist irrespective of the learning mechanisms employed.

Reference should also be made to the specifications of the following U.S.A. patents Nos: Re 29,525; 4,380,762; 4,385,296; 4,426,637; 4,529,980; 4,535,333; 4,574,247; 4,590,470; 4,596,985; 4,638,433; 4,652,860; 4,686,529; 4,737,770; 4,779,090; 4,835,407; 4,847,614; 4,855,713; 4,878,052; 4,890,108; 4,928,098; 4,951,029; 4,988,992; 5,049,867; 5,055,701; 5,191,610.

### SUMMARY OF THE INVENTION

The invention is as set out in the independent claims 1 and 13, preferred forms being set out in the dependent claims.

An embodiment provides, in the first instance, a method of operating an encoder which includes the steps of :
storing a serial number;
storing at least one of the following:
   a seed;
   a key; and
   a derivative of the key; and
transferring key generation information which includes at least one of the following:
   the seed;
   the key;
   the derivative of the key;
   the serial number; and
   Information derived from applying the key or the derivative of the key and an algorithm to an input value.

The key may be generated using at least one of the following:
a manufacturer's key;
the key;
the derivative of the key;
the seed; and
the serial number.

The input value may include information including at least one of the following:
a management code;
a counter value; and
Information relating to a command.

In one embodiment the method includes the steps of:
storing a plurality of parameter sets, each parameter set including at least one of the following:
   a respective serial number;
   a respective seed;
   a respective key; and
   respective information derived from applying the said respective key and the algorithm to a respective input value;
selecting a parameter set; and
transferring the respective key generation information for the selected parameter set.

Each respective input value may include at least one of the following:
a respective management code;
a respective counter value; and
information relating to a command.

The encoder may also include provisions for disabling the transmission of the key generation information. This facility is useful to prevent an outsider from obtaining the key generation information after the transmitter has been learned by a decoder. The transmission of key generation information can be permanently disabled by a conscious action by the user, or by an automatic process, e.g. when the encoder has been used a predetermined number of times. In the former case manual action can be taken by using a programming action or a specific combination of inputs.

An embodiment also extends to a method of operating a decoder which includes the steps of receiving a signal which contains key generation information; and extracting key generation information from the received signal.

The key generation information may include at least one of the following:
a seed;
a serial number; and
encoded information derived from applying a first key and an algorithm to an input value.

The method may include the step of storing at least one of:
the second key;
the key generation information; and
the serial number.

In one embodiment the received signal includes the encoded information and the method includes the steps of:
decoding the encoded information using a decoding algorithm and a previously generated second key to obtain a decoded input value which includes information selected at least from:
   a management code;
   a counter value; and
   information relating to a command; and
storing the decoded input value.

The method may include the steps of:
storing a plurality of parameter sets, each parameter set including information selected at least from:
   a respective serial number;
   a respective management code; and
   a respective counter value.

In a further embodiment, the key generation information includes a portion that may be used in the decoder to modify or augment the stored manufacturer's key during learning. The original or modified manufacturer's key may be used for generating the second key.

An embodiment further extends to a method of operating an access control system which includes an encoder and a decoder, the method including the steps of:
storing a serial number;
storing at least one of the following:
   a seed;
   a first key; and
   a derivative of the first key; and
using the encoder to transfer a signal which includes key generation information which includes at least one of:
   the seed;
   the serial number; and
   information derived from applying the first key or the derivative of the first key and an algorithm to an input value; and, at the decoder,
receiving the transferred signal; and
extracting the key generation information from the received signal.

The first key may be generated using a manufacturer's key and at least one of the following:
the said seed; and
the said serial number.

During learning, the key generation information may be used to modify or augment the manufacturer's key stored in the decoder. Alternatively, a decoder may not have a manufacturer's key at all, and may derive the decoding key solely from the key generation information transmitted by the encoder, or use that key generation information directly as a decoding key.

The second key or the key generation information may be stored. In the former case, the method includes the steps of:
activating the encoder with a command;
encoding at least an input value using the first key and an algorlthm to form an encoded part, the input value including information selected at least from:
   a counter value;
   a management code; and
   information relating to the command;
using the encoder to transfer a signal which is formed from at least the serial number and the encoded part; and, at the decoder,
receiving the transferred signal; and
using the second key and a decoding algorithm to decode the said encoded part in the transferred signal to obtain the said input value.

In the latter case the method includes the steps of:
activating the encoder with a command;
encoding at least an input value using the first key and an algorithm to form an encoded part, the input value including formation selected at least from:
   a counter value;
   a management code; and
   information relating to the command;
using the encoder to transfer a signal which is formed from at least the serial number and the encoded part; and, at the decoder,
receiving the transferred signal; and
using the key generation information and a decoding algorithm to decode the said encoded part in the transferred signal to obtain the said input value.

The method may further include the steps of:
using a plurality of encoders;
activating a selected encoder using a command;
transferring a signal which contains the key generation information associated with the selected encoder; and
at the decoder, storing a plurality of parameter sets, each parameter set being associated with a respective encoder and including information selected at least from:
a respective serial number;
a respective management code; and
a respective counter value;
receiving the said transferred signal, and
generating a respective second key, associated with a selected parameter set, using the manufacturer's key and the key generation information contained in the said transferred signal.

Preferably the encoder and the decoder are each formed in a respective microchip.

An embodiment also provides an encoder which includes:
means for storing a serial number;
means for storing at least one of the following:
   a seed;
   a key; and
   a derivative of the key; and
means for transferring key generation information which includes at least one of the following:
   the seed;
   the key;
   the derivative of the key;
   the serial number; and
   information derived from applying the key or the derivative of the key and an algorlthm to an input value.

An embodiment also extends to a decoder which includes means for receiving a signal which contains key generation information; and means for extracting key generation information from the received signal.

The key generation information may include at least one of the following:
a seed;
a first key;
a derivative of the first key;
a serial number; and
encoded information derived from applying the first key or the derivative of the first key and an algorithm to an input value.

The decoder may include means for generating a second key using at least the key generation information. The second key may be the key generation information.

Means may be provided for storing at least one of:
the second key;
the key generation information; and
the serial number.

The decoder may include means for storing a manufacturer's key and means for generating the said second key using at least the said key generation information and the manufacturer's key.

The decoder may include means for storing a plurality of parameter sets, each respective parameter set including at least one of the following:
a respective serial number;
a respective seed;
a respective key; and
a respective derived key.

During learning, the key generation information may be used to modify or augment the manufacturer's key stored in the decoder. Alternatively, the decoder may not have a manufacturer's key at all, and may derive the decoding key solely from the key generation information transmitted by the encoder, or use that key generation information directly as a decoding key.

An embodiment further provides an access control system which includes an encoder and a decoder, the encoder including:
means for storing a serial number;
means for storing at least one of the following:
   a seed;
   a first key; and
   a derivative of the first key; and
means for transferring a signal which includes key generation information which includes at least one of the following:
   the seed;
   the first key;
   the derivative of the first key;
   the serial number; and
   information derived from applying the first key or the derivative of the first key and an algorithm to an input value;
the decoder including:
   means for receiving the transferred signal; and
   means for extracting the key generation information from the received signal.

The first key may be generated using a manufacturer's key and at least one of the following:
the said seed; and
the said serial number.

The decoder may include means for storing a manufacturer's key and the said second key is generated using at least the said key generation information and the manufacturer's key.

It is to be understood that, during learning, the key generation information may be used to modify or augment the manufacturer's key stored in the decoder. Alternatively, the decoder may not have a manufacturer's key at all, and may derive the decoding key solely from the key generation information transmitted by the encoder, or use that key generation information directly as a decoding key.

The system may include means for storing the second key or the key generation information.

In one embodiment the system may include:
means for activating the encoder with a command;
means for encoding at least an input value using the first key and an algorithm to form an encoded part, the input value including information selected at least from:
   a counter value;
   a management code; and
   information relating to the command;
means for forming a signal, for transfer by the encoder, from at least the serial number and the encoded part;
the decoder including means for using the second key and a decoding algorithm to decode the said encoded part in the transferred signal, received by the said signal receiving means, to obtain the said input value.

In another embodiment the system may include:
means for activating the encoder with a command;
means for encoding at least an input value using the first key and an algorithm to form an encoded part, the input value including information selected at least from:
   a counter value;
   a management code; and
   information relating to the command;
means for forming a signal, for transfer by the encoder, from at least the serial number and the encoded part;
the decoder including means for using the key generation information and a decoding algorithm to decode the said encoded part in the transferred signal, received by the said signal receiving means, to obtain the said input value.

The system may include means for storing a plurality of parameter sets at the encoder, each parameter set including information selected at least from:
a respective serial number;
a respective seed; and
respective information derived from applying the said respective key and the algorithm to a respective input value;

means for selecting a parameter set;
means for activating the encoder using a command;
the signal transferring means then transferring a signal which contains the key generation information associated with a selected parameter set;
means for storing a plurality of parameter sets at the decoder, each parameter set including information selected at least from:
   a respective serial number;
   a respective management code; and
   a respective counter value; and
means for generating a respective second key, associated with a selected parameter set, using the key generation information contained in the said transferred signal.

The said respective second key may be generated using the said key generation information and the manufacturer's key.

Preferably the encoder and the decoder are each formed in a respective microchip.

It is an object of the present invention to provide an access control system wherein a transmitter or token, such as a so-called "smart card", may be replaced or added to the system by a user without external equipment and without transferring an encoding key in clear format i.e. in unencoded form.

The access control system may allow for the disabling, in a decoder, of stolen transmitter codes to prevent unauthorized access to the system.

Another object of the invention is to provide an access control system which acts against the use of code grabbing or scanning methods.

The invention is further concerned with an encoder and a decoder for use in an access control system, and with their method of operation.

During the manufacturing process, encoders are programmed with different serial numbers associated with a range of decoders. A unique manufacturer's key is used together with an algorithm and the serial number, to generate and store a user key in a non-volatile memory of the encoder, together with counter, management code and other information. Several sets of these parameters can be stored to handle several transmissions (transmit different commands by activating different inputs). The manufacturer's key is stored in all the manufacturer's decoders. User data and control data is also programmed to control the different functions that need to be activated by the encoder. The same algorithm used to generate the user key in the encoder must also be present in the decoder. The algorithm may use one or more of, amongst others, the serial number, the key generation seed and the manufacturer's key, in modified or unmodified form, to produce the encoder key.

In normal operation of an encoder, the key information associated with a parameter set is used to encode the variable counter information, together with the encoder management code, serial number and other information by making use of a special algorithm. The information that is encoded will be different each time the encoder is activated. This technique is referred to as code hopping. Although it is known that the counter information changes, the transmission is not predictable because of the secret key and algorithm that encode the information. In an access control system, a fixed part denoting the serial number may be generated with the code hopping part and together form a transmission value that is transmitted by a data transfer interface.

In one embodiment, an encoder learning capability is implemented. This allows a user to replace an encoder or add an encoder to be recognised by a decoder which has a learning mode function, selectable by the user. The learning mode function can be selected by activating it on the decoder. This can be accomplished by using a normai encoder and programming the output function to set the decoder in learning mode. This is also known as a master encoder or token. The use of such a master encoder allows for a higher level of security to be achieved. The master token may also be used in conjunction with input switches.

In a different embodiment, it is possible for an encoder to encode an external input value. This input value replaces the value to be encoded internally by the encoder. A bi-directional communication arrangement is used in this case. This procedure can be used to identify the originality of the encoder, known as identification friend or foe (IFF), for access control and authentication purposes. The encoder accepts a challenge value as an input from a terminal that forms part of an access control system. This input value is encoded by the encoder using the encoding function and key to form an encoded value. The encoded value is then transferred to the decoder that is part of an access control terminal. If a legitimate encoder is used, the encoded value will correspond with a decoded value calculated by the decoder and the decoder will enable an external function to operate. If it is not a legitimate encoder, the decoded value will not correspond with the value generated by the decoder, preventing the required response by the decoder.

The encoder can be used in a token or a transmitter type device in an access control system. A transmitter would generally, on activation, transfer information from the encoder output to a receiver system via a transfer medium such as radio (rf), infra red (ir) or microwave. A token can also designate a transmitter device, but more generally includes a device in which information transfer is done by means of electrical contacts and conductors. In these physical contact tokens (or smart cards), information can be transferred bi-directionally through read and write operations. In both cases the invention is directed to the transfer of information regarding the encoding or decoding key without possibly exposing the encoding or decoding key to the outside world.

Once the learning mode of the decoder is selected, the data from the new encoder is captured and the serial number is first used. By making use of the manufacturer's master key and the captured encoder serial number, a new decoder key is derived with the key generation algorithm that must form part of the decoder. The key generation information may be used to modify or augment the manufacturer's key before the new key is calculated. Alternatively, the decoder may not have a manufacturer's key at all, and may derive the decoding key solely from the key generation information transmitted by the encoder, or use that key generation information directly as a decoding key. The newly derived key is used to decode the variable (encoded) part of the previously captured transmission. Once decoded, it is checked to verify that the correct key was generated and used.

In a different embodiment, a further transmission can be required to be decoded. This double transmission system can then also check the decoded counter information to ensure that the generated key is valid. The encoder serial number is stored in non-volatile memory, and associated with it, the derived decoder key, management code, counter and other user information. The learning is thus verified before it is accepted as valid, after which the encoder can be used to activate the decoder in normal operation.

In normal operation, the encoder, when activated through electrical inputs, for example by depressing a push button switch, or switches, or by any other suitable command means, encodes the counter, button and management code information with an algorithm and a key. The management code information usually consists of information selected from the following group: the encoder status, command, identity, technology type, time, mode, integrity and user data. It may also include time information. This time information may be used to transfer the time that the encoding event took place or to indicate valid periods or expiry dates to the decoder system. The user key is associated with the serial number that forms part of the information that is stored in non-volatile memory. The unencoded serial number and the encoded information are transferred by external data transferring means. The data transfer can be a transmission by an encoder, or the encoder can be activated electrically in a specific application to transfer the data.

The decoder, on receipt of the transmission, detects the unencoded serial number and encoded part. It compares the serial number with the serial numbers of the learned encoders stored in its memory. If no comparison is found, the transmission is rejected. If a matching value is found, the decoder key stored in memory associated with the matching serial number is used to decode the encoded information with a decoding algorithm. The integrity of the transmission is checked to verify that the signal was received and decoded correctly. If this is valid, the counter is checked. If valid, the decoder counter information is updated and the output function control is activated. If the counter is not valid, the transmission is rejected.

The advantages of the security system are that the transmissions always differ without intervention from the user and that the learning process is conducted in a secure fashion. The learning decoder must be accessible and available and information regarding the manufacturer's key must be available in the decoder.

In a different embodiment, an even more secure learning process is implemented. Using an algorithm and a manufacturer's key together with a unique key generation seed chosen for each encoder, an encoder key is generated. The key generation seed and user key are programmed into every encoder along with the encoder serial number and management code information. The key generation algorithm and manufacturer's key need not reside in any encoder. No mathematical link need or should exist between encoder serial numbers and key generation seeds. When learning a decoder with a new encoder, the encoder is put into learning mode and the key generation seed and serial number are transferred to the decoder. The decoder generates a key for this encoder, using the manufacturer's key, key generation seed and key generation algorithm. As the key generation seed is only transmitted during the learning process, unauthorized access, under normal operation, is not possible even if the manufacturer's key is known.

In a further embodiment of the more secure learning process, a unique manufacturer's key for each transmitter can be used for the calculation of the key for that transmitter. All decoders do not therefore have to contain a complete manufacturer's key. During learning, the manufacturer's key related to a particular encoder is derived from the key generation information received from that encoder. The manufacturer's key can be derived by modifying or augmenting a stored complete or partial manufacturer's key, or by using the incoming key generation information exclusively to determine the manufacturer's key.

The decoder then calculates the encoder's key, using the modified or augmented manufacturer's key and one or more of the following: the encoder's serial number; the same key generation information used for the determination of the manufacturer's key; and further key generation information obtained from a further transmission.

The remainder of the learning procedure is identical to the described procedures.

In yet another embodiment of the more secure learning process, the encoder's unique key can be derived without further stored or secret information, but from information transmitted as a learning seed. In this embodiment, no manufacturer's key is required in the decoder.

In any or all of these embodiments, the encoder can be designed to allow transmission of the key generation information to be disabled permanently after the learning process has been completed. The disabling action can be executed by a specific input command, through a programming action or automatically. Automatic processes may include counting the number of activations of the transmitter and disabling transmission of the key generation information after one or a predetermined number of activations.

A verification process is initialised to verify that the correct key has been generated and that other encoder information has been stored. On completion, the encoder is now a valid encoder with correct synchronisation information. This verification process also ensures that transmitters with rogue encoders or transmitters from other manufacturers that do not have the correct manufacturer's key cannot be learned.

The use of a key generator seed protects the security of the system in the event of unauthorized scanning for the serial number of an encoder. With the known serial number, it is very unlikely, but possible, that an encoder can be forged if access is gained to the manufacturer's equipment and the manufacturer's key. If a key generator seed is used, however, the key that is stored in the decoder cannot be generated without having access to the owner's transmitter or token as well.

After the learning operation has been successfully executed and the decoder has returned to the normal operating mode, the encoder can be used to activate the decoder in the normal way. This means the serial number will again be compared against learned systems. Special baud rate compensation circuitry can be used during the reception process to allow reliable code reception. The stored key associated with the encoder serial number is used to decode the transmission. The integrity of the received and decoded transmission is checked for validity by comparing the management code information received and decoded from the encoder with the stored information. A similar process is carried out on the associated counter information. If successful, the counter information is updated and the predetermined output signal is selected, resulting in the correct external function being activated.

To prevent an intruder from grabbing key information and compromising a security system, it is desirable that the key information should not be transmitted. Code hopping makes it impossible for an intruder to gain unauthorised access to the decoder or the learning capability of the decoder by using code grabbing or generation, or by initialising an unauthorised code hopping encoder.

The described system makes use of stored keys in the decoder to decode incoming transmissions. An alternative arrangement for a learning system is to store only the key generation seed, instead of the full key, in the decoder's key location. During decoding operations, the correct key is generated from a selection of the associated seed, serial number and manufacturer's key. The advantage is that less non-volatile storage space is required, as the key generation seed may require less storage space than the key. The correct key is generated in RAM whenever needed. Since several encoders can be learned to a single decoder and the RAM can be used over and over, this implementation can be economical.

This invention can be used in different configurations to enable a manufacturer to utilise its principles, for example, in a vehicle security system, door or gate remote control security system or in a system to control personnel access to a security area. Different kinds of transmission media can also be used, for instance radio, infra red or a . physical wire connection.

### BRIEF DESCRIPTION OF THE DRAWINGS

The invention is further described by way of example with reference to the accompanying drawings in which:
Figure 1 is a simplified representation in block diagram form of an encoder and data transfer interface, and a decoder and data transfer interface, in an access control system according to the invention;
Figure 2 is a block diagram, in greater detail, of the encoder of Figure 1,
Figure 3 is a block diagram, in greater detail, of the decoder of Figure 1,
Figures 4a and 4b are flow charts of the operation of a learning algorithm embodied in the system of the invention, and
Figure 5 is a diagram of the storage format of sets of parameters used in the encoder and the decoder of the invention.

### DESCRIPTION OF PREFERRED EMBODIMENT

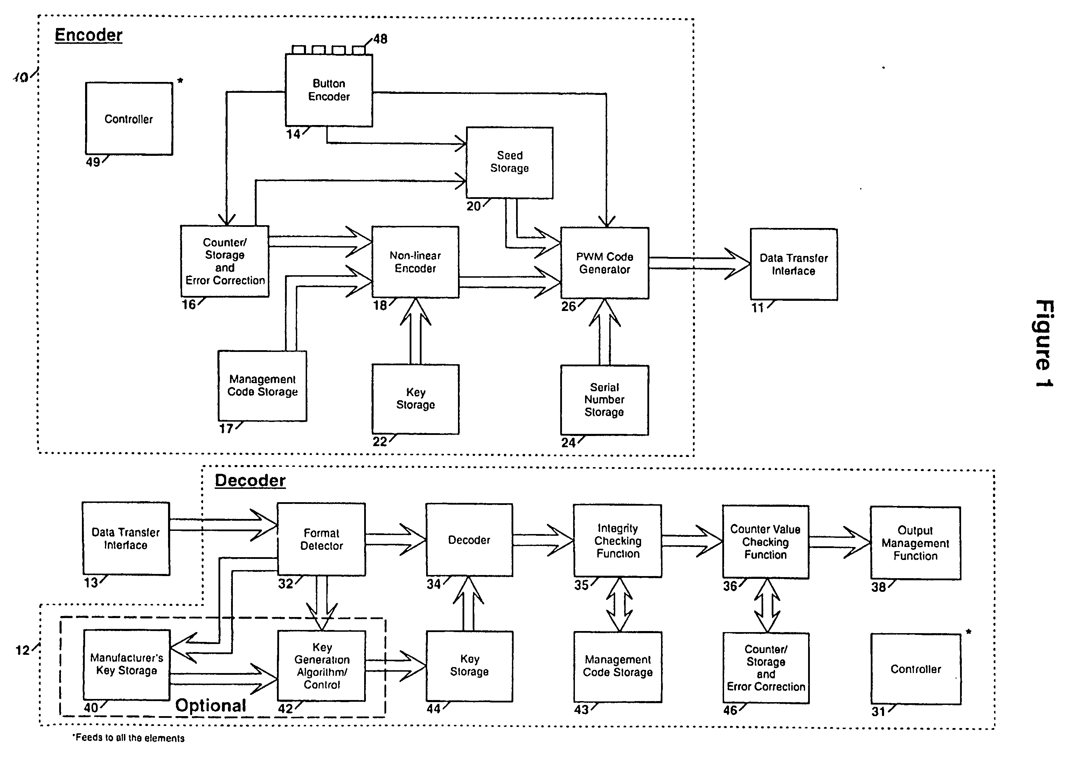

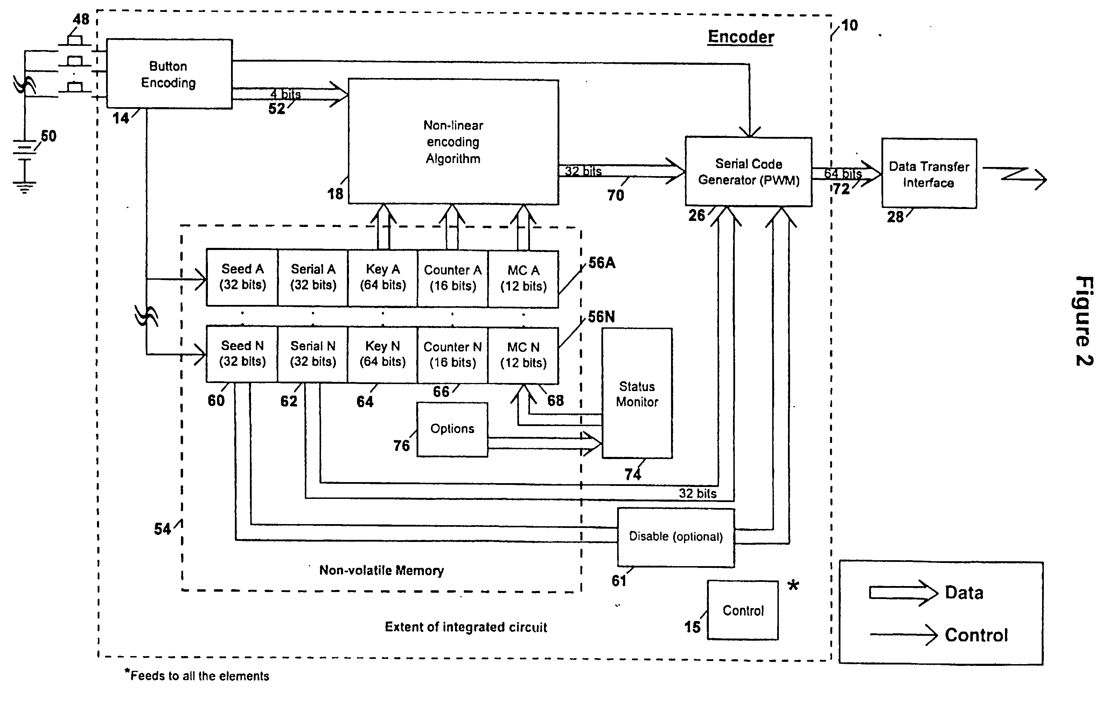

The invention is described hereinafter firstly in a general sense, with reference to Figure 1, in order to illustrate the principles of the invention and thereafter, with reference to Figures 2 to 5, in a more detailed manner which is related to a practical embodiment of the invention.

### Simplified Description

Figure 1 is a simplified block diagram of a transmitter comprising an encoder 10 and a data transfer interface 11, and a receiver comprising a decoder 12 and a data transfer interface 13, used in a code hopping remote control system. Sophisticated functions and multiple encoder/decoder combinations have been omitted only for the sake of clarity.

The invention is primarily concerned with the implementation of learning in a code hopping system. Learning has been implemented in standard fixed code systems, but code hopping systems present a unique challenge. Information encoded by the encoder cannot be decoded unless one has access to a user key and the encoded information can consequently not be used to transmit the key to the decoder. The invention is directed to overcoming this problem.

The encoder includes a button encoder 14, a counter/storage and error correction 16, management code storage 17, a non-linear encoder 18 having an encoding algorithm, storage 20 for a key generation seed, storage 22 for a user key, storage 24 for a serial number associated with the encoder, and a pulse width modulated (PWM) code generator 26.

The decoder 12 consists of a controller 31, a format detector 32, a decoder 34 having a decoding algorithm, an integrity checking part 35, a counter value synchronization checking unit 36, an output management function 38, counter/storage 40 for a manufacturer's key, a key generation algorithm/ control unit 42, storage 43 for a management code, storage 44 for a decoder key, and counter/storage and error correction 46 for counter information.

The button encoder 14 is responsive to a plurality of buttons 48 which are manually actuable. When a button is actuated the encoder 10, as a whole, is activated. The encoder may function in any one of a plurality of modes, as will become apparent from the following description, with the encoder operating mode being determined by the button or combination of buttons which are actuated. The encoder functions are controlled by a controller 49.

The controller 49 of the encoder controls the encoder operation. The controller 49 is connected to each part of the encoder and senses the operational state of each part and provides operational control signals to each part to control the operation and functioning of the encoder as a whole. Encoder commands are received from the external buttons and used to initiate operational control signals to the rest of the encoder. Control signals can consist of encoder mode changes, selection of transmission information, and activation of all the different parts as necessary.

The controller 31 of the decoder controls the decoder in a similar fashion to that exerted by the controller 49 on the encoder. The controller 31 is connected to each decoder part. It senses the operational state of each part of the decoder and provides operational control signals to each part to control the operation and functioning of the decoder as a whole from the decoder commands that are received from the format detector and mode select input signals. Control signals can consist of decoder mode changes, selection of key generation, storage of information, such as keys and serial numbers, integrity checking, synchronization and counter value storage, and output signals.

The controller 49 may function in either of two modes, namely a learning mode or a normal operating encoding mode. Each mode may be selected, as has been indicated, by an appropriate choice of the buttons 48, or in any other suitable way specific to the application arrangement of the encoder. Once a command has been entered by the button encoder 14, control signals are issued by the controller 49. In the normal operating mode, control signals to operate the counter/storage and error correction part 16, management code storage 17, non-linear encoder 18, key storage 22, serial number storage 24 and PWM code generator 26 to select and . activate the appropriate output of each specific part. This ensures that the encoder will function as described more specifically hereinafter.

If the encoder is used in a learning mode, the controller 49 issues control signals to the seed storage 20, serial number storage 24 and PWM code generator 26 to select and activate the appropriate output of each specific part. This ensures that the encoder will function as described more specifically hereinafter.

The controller 31 of the decoder may function in either of two modes, namely a learning mode and a normal operating encoding mode. The mode may be selected by appropriate internal or external circuitry. Internal circuitry can be activated by the normal detecting and decoding operation as described hereinafter, to put the decoder in a learning mode. External circuitry, such as a push button 110 or other switching means, can be used as well.

In normal operation mode, once the decoder has detected a received signal using the format detector 32, the controller 31 decides on the control signals to operate the decoder. Control signals are issued to the key generation algorithm/control unit 42, key storage 44, decoder 34, management storage 43, integrity checking 35, counter/storage and error correction 46, counter value checking 36 and output management 38 to select and activate the appropriate output of each specific part. This ensures that the encoder will function as described more specifically hereinafter.

If the decoder is used in the learning mode, the controller 31 issues commands to the key generation algorithm/control unit 42, key storage 44, decoder 34, management storage 43, integrity checking 35, counter/storage and error correction 46, output management 38 and learning control 100. This ensures that the decoder will store the appropriate information and function as described more specifically hereinafter.

In the normal operating mode the counter/storage and error correction 16 is activated each time the encoder 10 is used. Its count is therefore indicative of the number of times the encoder is used. The counter value is stored in non-volatile memory. The memory only operates when power is supplied to the encoder. If the counter value is changed and the power disconnected at the same time, it can cause spurious values to be stored. For this reason an error correction function is included in the counter/storage and error correction 16. The counter information is encoded in the non-linear encoder 18 using the user key in the storage 22. The output of the encoder 18 thus comprises variable information which is combined in the generator 26 with the serial number from the storage 24. The serial number, as has been noted, is associated with the encoder. The output of the generator 26 is applied to the data transfer interface 11 and . transmitted to the data transfer interface 13 and decoder 12. The serial number can also form part of a unit number uniquely to identify an encoder unit.

It is to be noted that the encoder and the decoder may be directly connected, for example by means of a wire, or the encoder and decoder may be remote from one another and the transmission of information may be done by radio signal, optically, at an infra-red frequency or in any other suitable way.

The signal which is received by the decoder 12 using the data transfer interface 13 is converted to a logic signal which, in turn, is converted by the format detector 32, to a number which is applied to the decoder 34. The detector may be a pulse width modulation code detector. The decoding algorithm of the decoder 34 decodes the variable portion of the number, yielding counter and management code information, the integrity of which is checked by the part 35 using management code information in the storage 43, to verify the validity of the decoding operation. If it is valid, the unit 36 compares the decoded counter information with counter information held in the storage 46 to determine that the decoded number is valid and has not been used before. If the reception is valid then the relevant outputs are activated by the output management function 38.

In order to implement learning the user places the decoder 12 in a learning mode. The encoder 10 is also effectively placed in a learning mode by activation of the appropriate buttons 48. In this case the key generation seed held in the storage 20 is applied together with the serial number in the storage 24 to the generator 26. It is to be noted that the key generation seed is only used during the learning operation. The whole operation of the decoder is controlled by the controller 31.

The data transfer interface 11 thus transmits information on the key generation seed and the serial number to the decoder 12. The data transfer interface 13 receives this information which is then detected by the detector 32 and passed to the key generation unit 42. This unit calculates a decoder key based on the incoming key generation seed and the manufacturer's key which is held in the storage 40. The newly generated decoder key is stored in the location 44 and can be used for any future decoding operations, acting on the decoding algorithm of the decoder 34.

The key generation algorithm that is used in the key generation unit 42 during the secure learning operation is usually a non-linear algorithm. This algorithm accepts as input the manufacturer's key 40 (not shown) and key generation information. The key generation information can consist of the encoder serial number 24 or the seed 20 or both. The key generation information may be used to modify or augment the manufacturer's key stored in the decoder before the new key is calculated. Alternatively, the decoder may not have a manufacturer's key at all, and may derive the decoding key solely from the key generation information transmitted by the encoder, or use that key generation information directly as a decoding key. This information is transferred from the encoder in a learning operation to the decoder.

The decoder 12 uses the key generation algorithm to generate a key, held in the storage 44, that is used to decode a normal code hopping transmission. The security of this mechanism arises from the fact that the relationship between the transmitted seed and the decoding key is not known, rendering any kind of interception of the transmission pointless. The non-linear key generation function also makes it impossible to establish any relationship between the key and the key generation information, and thus an illegitimate encoder cannot be produced. The key 22, serial number 24 and randomly generated seed 20 of an encoder 10 are loaded during the manufacturing process. The manufacturer generates the key using the seed, serial number, manufacturer's key and key generation algorithm. The key generation algorithm is not made known publicly. Because the seed is a random number, and the serial number is also used in this process the possibility of manufacturing two encoders with the same keys is very slim.

The verification of the learning process is effected as follows. The user presses the appropriate button 48 for normal operation of the encoder 10, thereby causing the transmission of the variable code which is produced by the non-linear encoder 18, and of the serial number held in the storage 24. The newly generated decoder key in the storage 44 is used to decode the incoming code in the decoding algorithm of the decoder 34. The management code information which is thereby produced, is used to verify the validity of the decoding operation by comparing it to the management code in the storage 43. The incoming counter information is stored in the relevant storage location 46. An error correction function is included in the unit 46 to ensure that if spurious data is stored during a power failure, the correct data can be recovered as soon as power is restored to the decoder.

The user then activates the encoder 10 again. Once more the resulting variable code and the serial number are received by the data transfer interface 13. The variable code is decoded by the decoding algorithm of the decoder 34, using the newly generated decoder key. The counter information which results from this transmission is checked against the counter information held in the storage location 46. If the comparison indicates that the two variable code transmissions were successive then it is assumed that the learning process has been valid and the decoder is taken out of the learning mode. The system may now be used for normal operation.

A special relationship exists between the key generation seed in the storage 20 and the user key held in the storage 22. This relationship is dependent on the manufacturer's key held in the storage 40. The manufacturer's key is however not programmed into the encoder but, instead, is used in a production line programming unit which programs corresponding key generation seeds and user keys into respective encoders. The manufacturer's key is, on the other hand, wholly or partially programmed into each decoder and is used during learning, in the manner described, to calculate the correct decoder key, which is then held in the storage location 44, from the received key generation seed.

The calculation of the decoder key may involve augmentation or modification of the manufacturer's key from the key generation information. Alternatively, the decoder may not have a manufacturer's key at all, and may derive the decoding key solely from the key generation information transmitted by the encoder, or use that key generation information directly as a decoding key.

In a variation of the learning process the serial number which is held in the storage 24 is used by the key generation unit 42 to generate the decoder key. In this case there is no need for the encoder to have the capability of transferring the key generation seed. Further, a special relationship exists between the serial number and the user key, rather than between the key generation seed and the user key.

The serial number is present in each transmission. Thus the encoder from which a transmission originates can be identified even though an outsider cannot gain access to the information contained in the transmission. The serial number can be used to identify several encoders in a single system making it possible to accommodate several distinct encoders in a single decoder system.

### Functional Description

The following description, based on Figures 2 to 5 of the accompanying drawings, is made with reference to a practical form of the control system of the invention which embodies the general principles which have been described in connection with Figure 1.

Where applicable similar reference numerals to those employed in Figure 1 are used in Figures 2 to 5 to indicate like components.

Figure 2 depicts an implementation of a code hopping remote control transmitter comprising an encoder 10, buttons 48, a controller 49, a power supply 50 and a data transfer interface 11, which may all be housed in a protective housing, which is fitted with a keyring to enable the user to transport the transmitter conveniently. The buttons 48 may be push button switches, for activation by remote control of the various functions of the security system, and possibly for the supply of power, from the power supply 50, which may be a battery, to the entire transmitter.

All the elements shown in the block diagram, apart from the power supply 50, the button switches 48 and the data transfer interface 11, can be implemented in a single integrated circuit. An application-specific integrated circuit is the preferred implementation in order to make reverse engineering as difficult as possible. Reverse engineering poses a security risk in security systems, as full access to algorithms and stored information is provided by this process.

The encoder 10 includes a button encoder 14 for encoding information regarding the buttons 48 which are pressed and outputs encoded information 52 which is used for controlling the operation of the encoder using the controller 49 as well as other parts, and which may be encoded as a "function request" to determine the functions to be activated by the decoder 12. The controlling functions include selecting the mode of operation of the serial code generator 26, and selecting the virtual encoder to be emulated. (The meaning of the phrase "virtual encoder" will become apparent from the following description). A function request can activate one of several outputs on the decoder. A typical application would be in a vehicle security system, where different decoder outputs could be used to disarm an immobiliser, arm an alarm, disarm the alarm and operate electric windows of the vehicle.

As an example of the button encoder 14, if a number, b, of buttons are used to activate the encoder, the button encoding function encodes the value b to distinguishable values that are passed to the internal circuitry of the encoder. Pressing two buttons at the same time can for instance initiate the generation by the button encoder 14 of a distinguishable value that activates the encoder to transfer encoder related information. If either one of the same two buttons is used separately, a totally different value is generated by the button encoder 14, resulting in the selection and transfer of different information. This means that with b buttons, 2^{b} different functions can be distinguished and selected. The button encoder 14 can also be used to set the encoder in a learning mode by programming the encoding function to output a predetermined value which can be presented if any one or a combination of buttons are pressed.

A section of non-volatile memory 54 is used to store a plurality of parameter sets 56A.......... 56N. Each parameter set consists of a fixed key generation seed 60 which corresponds to the seed held in the storage 20 of Figure 1, a serial number 62 which corresponds to the serial number held in the storage 24 of Figure 1, an encoding or user key 64 which corresponds to the user key held in the storage location 22, counter and error correction information 66 which includes the counter information held in the counter/storage and error correction 16, and a management code 68 corresponding to that held in the storage 17.

As has been noted provision is made for the storage of several parameter sets 56. Each parameter set is associated with what is termed herein a "virtual encoder", for the encoder can act as any one of different virtual encoders, depending on which buttons 48 are pressed.

The counter/storage and error correction 16 is updated each time the encoder is actuated. When several parameter sets are used, however, only the counter information in a particular parameter set is updated each time the corresponding virtual encoder is used.

A specific encoder can either use a single stored parameter set 56 along with various function requests, or different parameter sets with similar or different function requests. Typically, different parameter sets will be used if several different decoders are to be accessed. Several functions might be accessible on each of these decoders. A single encoder might then be configured to access all the decoders, using different parameter sets, and be able to combine different function requests with each of the parameter sets.

The serial number 62 is unique to a particular virtual encoder, and is encoded with each emission from that particular virtual encoder. The encoding or user key 64 is a number, unique to a specific virtual encoder, that is used to encode the transmission in such a way that the original encoded information cannot be retrieved by an outsider. The management code 68 consists of information about the status of the particular virtual encoder, and may include sections with predefined values for checking the integrity of decoding operations in the decoder. The counter and error correction information 66 is the count of a 16 bit counter, used for keeping track of the synchronisation between the encoder and the decoder and error corrected if a spurious error occurs during a storage operation. The counter is altered each time the virtual encoder is operated. The key generation seed 60 is a number which, as has been noted with reference to Figure 1, bears a specific relationship to the encoding key 64. While the key is read-protected, the seed 60 is not necessarily inaccessible. However, the relationship between the two is sufficiently obscure that an outsider will not be able to infer the key from the value of the seed.

Means 61 can also be included permanently to disable transmission of the seed 60 after learning has been completed. The disabling means can be activated automatically (e.g. when a predetermined number of transmissions have passed) or by a conscious action of the user, including but not limited to, a specific combination of inputs.

The non-volatile memory 54 is read-protected to prevent scrutiny of the encoding keys 64 from outside. Access to the keys, or to the serial number 62, the seed 60 and the manufacturer's key in the storage 40, could enable an outsider to program a similar encoder with an identical key and gain access to the system.

The encoder includes a non-linear encoder 18 which uses a user key 64 to encode an input string. The key length should be sufficient to ensure reasonable immunity against analytical attacks, considering the state of the art in computer technology. A key length of 64 bits is considered adequate for security and access control systems. The use of longer keys has adverse cost implications, while shorter keys provide reduced security levels. The length of the output string 70 of the non-linear encoding algorithm determines the number of bits encoded by the encoder. A 32 bit output string provides a good balance between security and response time at typical remote control transmission rates. The input string to the encoding algorithm is 32 bits and contains function information 52 from the button encoder 14 (4 bits), the counter information 66 (16 bits) and the management code 68 (12 bits), specific to the encoder being activated. The management code can contain system status information, including low battery voltage indicators and mode selections.

A serial code generator 26 is used to assemble the code to be emitted. The code consists of either a combination of the 32 bit encoded string 70 produced by the non-linear encoder 18 and the serial number 62 of the encoder, or of a fixed key generation seed 60 and the serial number 62. . The code generator 26 also implements the modulation scheme required for transmission by the data transfer interface 11 which in this case is pulse width modulation (PWM).

The output 72 of the serial code generator 26 is emitted by the interface 11 using electromagnetic or other means. The data transfer interface 28 can be replaced by a direct connection in the case where remote operation is not required.

The encoder includes a status monitor 74 which can alter parts, for example status information, of the management code 68 in a particular memory block, depending on selected options and conditions existing in the encoder. These changes can be detected in the decoder to provide feedback on imminent encoder problems, for example a flat battery. The status aspects which are monitored are selected via an options register 76.

The options are programmed in the encoder in the options register 76 that forms part of the non-volatile memory. The status monitor 74 selects different encoder status according to the options programmed in the options register 76. A specific predetermined option may indicate for instance a low battery voltage. The same value is programmed in the decoder to sense the low battery voltage indication in a transmission for indication to the user. The programmed options and the selected status . monitor 74 are activated, when an encoder is activated. The predetermined value is substituted in part of the management code 68 before encoding and transferring the information. The options, when selected and transferred, are sensed by the decoder after decoding so that the programmed action can be taken.

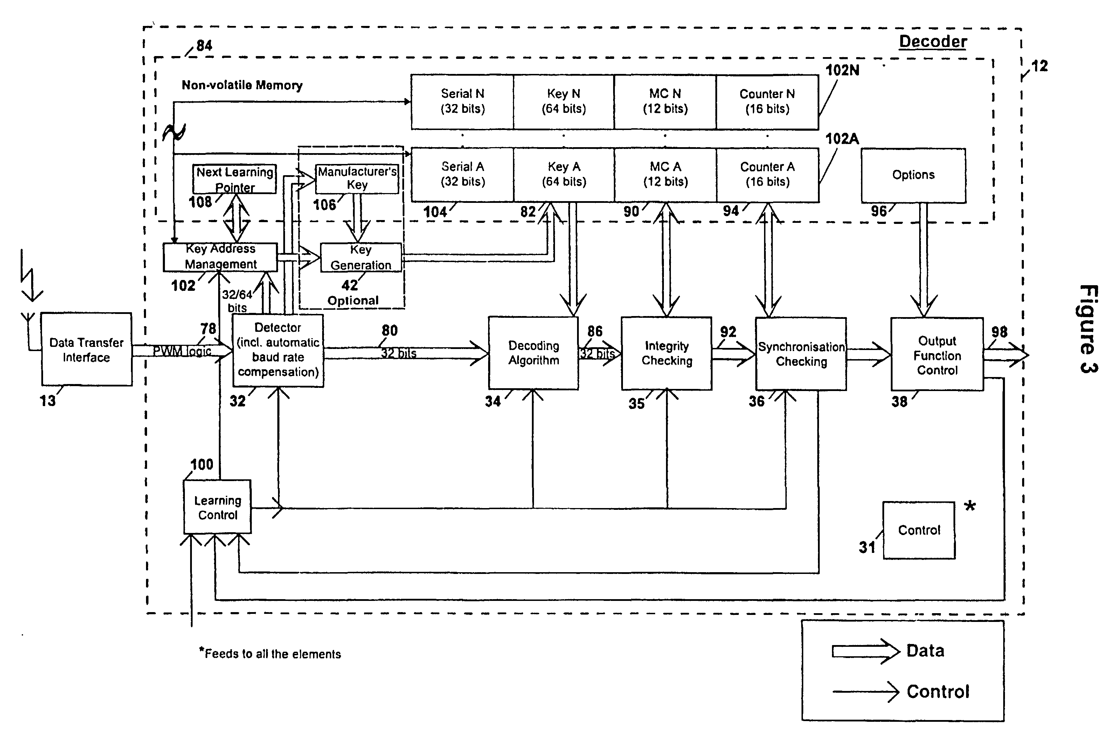

Figure 3 depicts an implementation of a learning code hopping access control decoder 12.

A data transfer interface 13 converts the electromagnetic or other signals used for transmission of the signal from the data transfer interface 11 into a baseband logic signal 78 still modulated according to the modulation scheme implemented by the serial code generator 26.

The decoder includes a detector 32 which has means for compensating for differences in transmission length due to timing differences between the encoder and the decoder.

The detector 32 extracts a 32 bit variable number 80 from the signal 78 and applies it to a decoding algorithm 34 which decodes the variable number, using a 64 bit decoder key 82 stored in a non-volatile memory 84. If a valid decoding process has taken place the resultant 32 bit code 86 contains the information inserted into the non-linear encoding algorithm of the encoder 18 before encoding.

The decoder includes an integrity checking unit 35 to verify the validity of the decoding process. For a valid decoding there is a predetermined relationship between a stored management code 90, which corresponds to that held in the storage 43 of Figure 1, and the corresponding portion of the decoded 32 bit word 86.

The decoder key 82 corresponds to the decoder key held in the storage location 44 of the decoder 12 of Figure 1.

A synchronization checking unit 36 verifies the validity of a transmission by comparing incoming counter information 92, produced by the integrity checking unit 35, with stored counter information 94 for the relevant encoder. The counter information 94 corresponds to the information held in the storage location 46 of the decoder 12 of Figure 1 and includes an error correction function to ensure that the value of the counter is corrected when a spurious error is stored during a power failure.

An output management unit 38 manages the activation of, or communication with, other devices in the system. The unit 38 provides an indication of which of several functions is or are desired, whether the encoder 10 has ceased encoding and whether any special options are being requested. An indication of the identity of the encoder, from which the received signal originated, may also be made available. The unit 38 also makes use of storage space in the non-volatile memory 84 to manage options, determined by an option control unit 96, which may influence the format in which output signals 98, which are produced by the unit, are presented, or may enable or disable specific system features.

A learning control unit 100 manages the learning process by passing appropriate instructions to the detector 32, the decoding algorithm of the decoder 34, the integrity checking unit 35, the synchronisation checking unit 36 and a key address management unit 102. The unit 100 can be placed into the learning mode from outside the decoder, or special output combinations can be used to place the decoder in the learning mode, by passing the relevant signal from the management control unit 38 to the learning control unit 100. Typically a single memory block is reserved for this purpose. The decoder, including the learning control 100, is controlled by a controller 31.

A parameter set 56 of a designated encoder, referred to as a master encoder, is stored in this reserved memory block. When the master encoder is activated the output function control unit 38 sends a control signal to the unit 100 thereby placing the decoder 12 in the learning mode.

The non-volatile memory 84 makes provision for the storage of a plurality of parameter sets 102A........102N which correspond to the parameter sets 56A..........56N in the encoder. Each parameter set includes a serial number 104 which corresponds to the serial number 62 of the corresponding encoder, and the associated decoder key 82, management code 90 and counter information 94. A manufacturer's key 106, corresponding to the information held in the storage location 40 of Figure 1, is also stored in the memory 84 for use during learning operations.

An alternative embodiment of the decoder may also include provision to augment or modify the manufacturer's key 40 during learning with part or all of the key generation seed. Alternatively, the decoder may not have a manufacturer's key at all, and may derive the decoding key solely from the key generation information transmitted by the encoder, or use that key generation information directly as a decoding key.

The key address management unit 102 manages the passage of information to and from the non-volatile memory 84. The key address management unit can be implemented in hardware or in software or in a combination thereof. This unit selects the memory bank to be used with each memory bank being capable of storing a single parameter set. A pointer is also maintained in a memory segment 108 indicating the next memory bank to be used for learning operations.

During learning operations a key generation unit 42 generates a decoding key 82 for the new encoder and transfers it to the relevant memory . location for the respective parameter set 102. A non-linear encoded algorithm of a similar level of complexity to the code hopping algorithm is used to ensure that the relationship between the key generation seed and the encoding or decoding key 82 is as obscure as possible.

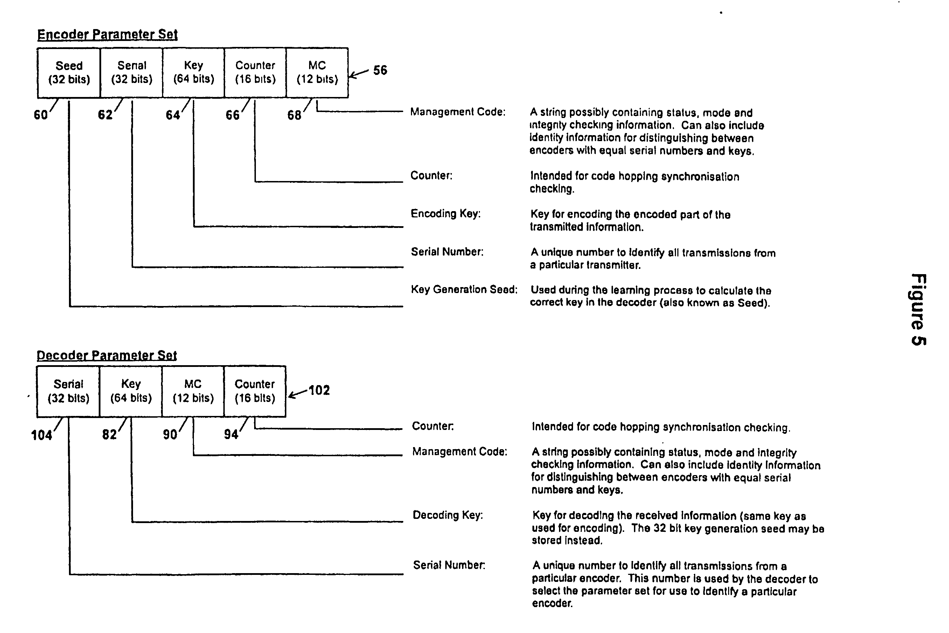

Figure 5 contains a representation of a encoder parameter set 56 and a decoder parameter set 102 and includes a summary of the contents of each parameter set.

### Operational Description of the Encoder

When the user presses a button 48 to activate the encoder 10, the button encoding unit 14 determines which button or combination of buttons has been pressed and generates the 4 bit function code 52 together with a combination of control signals. The control signals determine from which memory block the relevant parameter set will be taken and whether the transmission should consist of a hopping code or a fixed code.

The buttons 48 may be replaced by a system that can command the encoder electrically. The command can be generated, for instance, by a computer or other equipment, using a special command interface. The power of the encoder may also be supplied by the command interface.

In another application the encoder and decoder combination can be used for authentication and access control purposes. The encoder can be housed in a token or smart card that a person can carry and use to access, for instance, a security area. The communication takes place on an electrical interface. In this case bi-directional communication is used to communicate information between an encoder and a decoder. The serial number 62 of the encoder is transferred to the decoder to establish the key 82 to be used in the decoding process. A value is presented as an input value to the encoder by the decoder, known as a challenge. The encoder encodes the challenge value and returns the encoded value to the decoder. The decoder now decodes the encoded value and compares it with the challenge value to establish the authenticity of the encoder and activate an output accordingly. This technique is generally known as IFF (identification friend or foe). In this application, the seed 60 of the encoder can be transferred to a decoder in learning mode. The key (82) can be generated and stored in the decoder as described herein.

The ability to employ more than one parameter set for an encoder enables the encoder to address more than one decoder without interference, even if a single operating frequency is shared. The encoder appears to be a chosen one of several independent encoders, each of which is capable of independent operation, hence the phrase "virtual encoder". Clearly the encoders are not capable of simultaneous operation. For hopping code operation the non-linear encoding algorithm of the encoder 18 uses the respective encoding key 64 to encode the counter information 66 and the management code 68 together with the 4 bit function code 52. The 32 bit output code 70 is presented to the serial code generator 26. The counter information 66 is altered each time a transmission takes place for the respective virtual encoder. The serial code generator 26 appends the relevant encoder's serial number 62 to the encoded part thereby forming a single output code 72 which is presented to the input of the data transfer interface 11 in PWM serial form (in this example).

For fixed code operation the key generation seed 60 is presented directly to the serial code generator 26 which presents the code, together with the serial number 62, in PWM serial form to the data transfer interface 11.

Means can also be included to permanently disable transmission of the seed 60 after learning has been completed. The disabling means can be activated automatically (e.g. when the encoder has been used for a predetermined number of transmissions) or by a conscious action of the user including, but not limited to, a specific combination of inputs. The disabling means may take on any suitable form and may be a switch 61, activated as described, which interrupts data flow from the seed 60 to the generator 26. Alternatively the control 49, in response to a manual or other input, can be used to inhibit data transfer from the seed to the generator 26. The control could also be used to activate the switch 61.

In both modes of operation the data transfer interface 11 transmits the . information from the serial code generator using electromagnetic or other means.

### Operational Description - Decoder normal operation

Signals received by the data transfer interface 13 are converted to the logic signal 78, still in PWM form. The format detector 32 monitors the logic signal 78 and when the initial portion of an apparently valid signal is observed the detector calibrates itself on the incoming signal to compensate for deviations from nominal timing. The remainder of the incoming signal is received and converted to a number which, in this example, is a 64 bit binary number.

The first 32 bits of the detector output, i.e. the hopping code, are designated 80 and are presented to the decoding algorithm of the decoder 34. The last 32 bits i.e. the serial number, are presented to the key address management unit 102. This unit determines the memory block to be used by comparing the received serial number with the stored serial numbers 104 until a match is found. The decoding algorithm 34 uses the decoder key 82 from the correct memory block i.e. the respective parameter set, to decode the hopping code 80. A 32 bit output 86 is presented to the integrity checking unit 88. This 32 bit string comprises the original 4 bit function code 52, 16 bits of counter information 66 and the 12 bit management code 68. The integrity checking . unit 35 checks for a predetermined relationship between the decoded management code 68, in the decoded word 86 and the stored version 90. If a defined relationship exists the decoding is held to have been valid.

The decoded counter 66 is compared with the stored counter 94 held in the respective parameter set. If the synchronisation proves that the transmission is valid the stored value 94 is updated and the output control function unit 38 is advised accordingly.

The unit 38 outputs the decoded function information 98. The unit may make the information available in serial format for use by an external controller or may have discrete outputs to indicate any of a number of different conditions. The identity of the encoder being decoded that can be included as part of the management code, a valid signal indicator, and a second function mode, are all examples of useful output information 98.

### Operational Description - Decoder Learning Operation

Learning operation takes place when the user wishes to add a new encoder to the system. The learning control unit 100 then receives an input signal prompting it to enter the learning mode. The signal may be in the form of an instruction from outside e.g. generated by a switch or may emanate from the output function control unit 38 after reception of a valid code, as has been described hereinbefore.

The user now activates the encoder 10 as a fixed code encoder using a specific learning hardware configuration. The key generation seed 60 is substituted for the variable code portion of the transmission and the serial number 62 is retained as the remainder of the encoded code.

The resultant signal, emitted by the data transfer interface 11, is received by the data transfer interface 13. The format detector 32 passes the entire received transmission 78 to the key address management unit 102. Thus the signal presented to the unit 102 is a 64 bit string. The unit 102 deviates from its normal functioning in the learning mode and generates a decoding key 82 from one or more of the serial numbers, the received key generation seed and the manufacturer's key 106. The key generation seed or serial number may be used to vary the manufacturer's key 106 before the decoding key is generated. The manufacturer's key may be modified, or augmented, in any suitable way using the seed or serial number or both. This key is written into one of the memory blocks depending on the value of a pointer used specifically for this purpose and held in the memory block 108. The received serial number 104 is stored in the relevant memory block associated with the respective parameter set. The next learning pointer can be managed according to a variety of different schemes. Options include, inter alia, cycling the pointer through the available memory locations and allowing the user to set the pointer from outside.

From a security point of view a key generation algorithm, of the kind carried out by the unit 42, should only be implemented in an application-specific integrated circuit as a generic logic device, such as a micro processor, is readily reverse engineered, leaving the algorithm open to public scrutiny.

The user now activates the encoder twice in the code hopping mode. During the first transmission the 64 bit code is received by the data transfer interface 13 and detected by the detector 32. The decoding algorithm of the decoder 34 decodes the 32 bit variable code 80 using the newly generated decoder key 82 and stores the decoded management code 90 in the correct location. The decoded counter information 94 is also stored in the correct location.

During the second transmission the received signal is detected by the detector 32 and the serial number is passed to the key address management unit 102 where it is compared with the newly stored serial number 104. In addition the 32 bit variable code 80 is decoded by the decoding algorithm 34. The integrity checking unit 88 checks the decoded management code against the stored version 90 and the synchronisation checking unit 36 checks the decoded counter information against the stored version 94. If any of these checks is unsuccessful the learning operation is rejected. If they are all successful the next learning pointer in the storage location 108 is altered to indicate that the next memory block is available for learning.

The learning process may also include a routine to learn a specific combination of outputs for use with a specific encoder. For example a specific user may require special priority in a specific system and this priority can be assigned during such a routine.

Once the entire learning operation has been successfully concluded the user should activate the encoder once more to verify that the encoder is operating correctly.

### Decoder Operation - Alternative Key Management Scheme

The system as it has been described thus far makes use of stored keys 82 in the decoder to decode incoming transmissions. An alternative arrangement for learning systems is to store only the key generation seed, instead of the full key, in the location allocated for the key 82. During decoding operations the correct key is generated from the associated key generation seed and the manufacturer's key 106. The advantage is that less non-volatile storage space is required as the key generation seed typically requires less storage space than the key. The correct key is generated in RAM whenever needed.

### Learning Algorithm

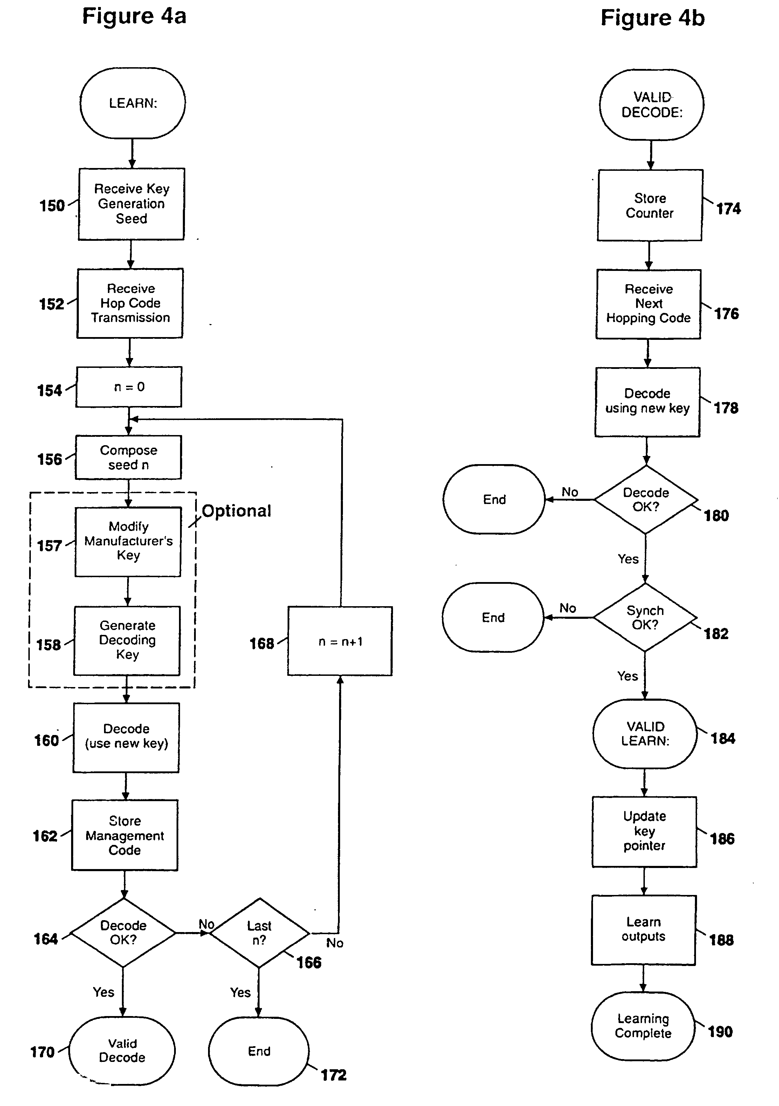

Figures 4a and 4b are flow charts of the learning algorithm embodied in the decoder. Referring to Figure 4a, once the learning mode has been established as described previously, the key generation seed (stage 150) and the hopping code (stage 152) are received by the decoder. At a stage 154 a relational counter (in the key generation unit 42) is initialized, and set to zero. The relational counter is used to allow for more than one relationship between the key generation seed, the encoder serial number and the key for the encoder, or between the encoder serial number and the key for the encoder.

The relational counter 154 is used at a stage 156 to compose a modified seed for the key generation algorithm which is a non-linear algorithm using at least the key generation seed as an input. The key generation seed may be used to vary, e.g. modify or augment, the manufacturer's key 106 before each learning operation (stage 157). Alternatively, the incoming seed can be used, in its original or a modified form, exclusively (i.e. without a manufacturer's key) as a decoding key. Thus, as is shown in Figure 1, referring to the decoder, a control signal from the format detector 32 can be applied to the storage 40, to modify the manufacturer's key before the fresh decoding key is generated. On the other hand the storage 40 and the key generation unit 42 can be dispensed with so that the incoming information is supplied to the storage 44, as is indicated by a dotted data transfer line, and held in the storage 44 for use as the fresh key. It is apparent that, referring to Figure 4a, and depending on the embodiment of the invention, the stage 157 is optional. Also, if the incoming information is to be used directly as the fresh key, the stage 158 is dispensed with. This variation is also shown in Figure 3 where an optional data transfer link extends from the detector 32 to the intermediate storage for the key 106. In addition, as has been explained the unit 42 and the intermediate storage for the key 106 can be removed, or inhibited. In this case the incoming data is directly transferred from the detector 32 to the storage for the key 82. The integrity of the decoding operation is checked at a stage 164 to decide if the decoding operation is valid. If valid, the flow proceeds to stage 170. If it is not valid, it is decided if the operation should carry on or not at a stage 166. If the operation should carry on, the relational counter 154 is incremented (stage 168) to establish a new relationship that may be valid.

The learning process terminates at a stage 172 if all valid relationships between the key generation seed and the serial number have been used and a valid relationship (stage 166) has not been found.

The probability of accidentally accepting an invalid encoder during learning is related to the number of predefined bits within the encoded management code. Since no more than 12 bits are available in the implementation under discussion the best integrity is in the order of 1 in 4000. This level is regarded as inadequate for security systems. The integrity can be improved either by increasing the length of the known component of the management code or by implementing a checking algorithm based on a second transmission (stage 176 in Figure 4b) from the encoder being learned. Longer code lengths have disadvantages such as higher implementation cost and longer response times. Using a second transmission increases the certainty of the integrity checking by many orders of magnitude without affecting the system cost or the response time.

The second part of the flow chart implements this technique, as described with reference to Figure 4b. If the decoding function is performed and found valid (stage 170), a decoded counter value is stored (stage 174). At stage 176 a second hopping code is received. This code is decoded (stage 178) and the decoded management code verified (stage 180) with the stored management code. If the values do not match the learning process is accepted as invalid and aborted. Next, the counter value is verified at stage 182 with the stored counter value. If the values do not match, the transmission is accepted as an invalid and illegitimate learn operation, and aborted. If the counter values match, a valid learn operation is accepted (stage 184). If the counters do not match, as with normal code hopping system operations, some leeway may be allowed in the counter synchronization checking (stage 182) to allow for interim transmissions that may not have been decoded by the decoder, and can be accepted as if they match and are regarded as valid.

At the stage 184 it is assumed that a valid learning process has been completed. The next learning pointer (reference 108 in Figure 3) is updated at stage 186 to point to the next available learning position. Output configuration learning associated with a particular encoder can be included at a stage 188 if required. At a stage 190 the learning cycle is completed.

Obviously, numerous modifications and variations of the present invention are possible in the light of the preceding teachings. For example, the encoder part 10 is implemented on an application specific integrated circuit (ASIC). Part of the circuit is made up of non-volatile memory that is used to store the different changing and programmable values, such as the parameter sets 56 and options 76. Although this method of implementation is used to ensure the security and practical aspects of the system, it can be implemented in software in a computer or a microprocessor controller. The same approach is used with the decoder 12. The functions and memory parts are implemented on an ASIC, but can also be implemented on a computer or microprocessor controller. This Implementation may be preferable at the decoder, as the decoder may be required to store a large amount of information to allow many users to access the system. It is therefore understood that within the scope of the appended claims, the invention may be practised otherwise than as specifically described herein.

## Claims

1. A method of determining a key to be used for encrypting and decrypting information transmitted between an encoder and a decoder (10, 12), comprising the steps of:
storing a key (22) in the encoder (10) during manufacturing, the key (22) being generated using first information, second information, and a key generation routine;
storing the second information in the encoder;
storing a key generation routine and the first information in the decoder (12) during manufacturing;
transmitting the second information from encoder (10) to the decoder (12) during learning;
receiving the second information by the decoder (12) during learning; and
calculating, during learning, a key (44) in the decoder using the second information which has been received, the first information which has been stored during manufacturing, and the key generation routine.

2. A method according to claim 1 wherein:
the encoder (10) is a transmitter and operates during the learning without performing a step of receiving information from the decoder.

3. A method according to claim 1 or 2, wherein:
the decoder (12) is a receiver and operates during the learning without performing a step of transmitting to the encoder.

4. A method according to one of the preceding claims, wherein:
the step of storing the second information comprises storing the second information which is a serial number (24), and
the step of transmitting the second information comprising transmitting the second information which is the serial number (24).

5. A method according to one of the claims 1-3, wherein:
the step of storing the second information comprises storing the second information which is a seed (20), and
the step of transmitting the second information comprising transmitting the second information which is the seed (20).

6. A method according to one of the claims 1-3, wherein:
the step of storing the second information comprises storing the second information which is a randomly generated seed(20), and
the step of transmitting the second information comprising transmitting the second information which is the randomly generated seed (20).

7. A method according to one of the claims 1-3, wherein:
the step of storing the second information comprises storing the second information which is information derived from applying the key (22) and an algorithm to an input value, and
the step of transmitting the second information comprising transmitting the second information which is the information derived from applying the key (22) and the algorithm to an input value.

8. A method according to one of the preceding claims, wherein:
the step of storing the first information in the decoder during manufacturing comprises storing the first information which is a manufacturer's master key (40); and
the step of calculating the key (44) in the decoder uses the first information which is the manufacturer's master key (40).

9. A method according to one of the preceding claims, further comprising the step of:
storing third information, in the encoder, which is different from the second information stored during manufacturing,
wherein the step of transmitting the second information further comprises transmitting the third information from the encoder to the decoder during learning, and
wherein the step of receiving the second information comprises receiving and storing the third information during learning.

10. A method according to claim 9, further comprising, performed after the step of calculating the key in the decoder, the steps of:
encoding information by the encoder (10) using the key (22) stored therein;
transmitting the third information and the information encoded by the encoder (10);
receiving, by the decoder (12), the third information and the information encoded by the encoder (10);
comparing, by the decoder (12), the third information which was transmitted with the information encoded by the encoder (10) with the third information stored during learning;
decoding, by the decoder (12), the encoded information; and
executing a function which corresponds to the encoded information which has been decoded, only when the step of comparing determines that the third information which was transmitted with the information encoded by the encoder (10) corresponds to the third information stored during learning.

11. A method according to claim 10, further comprising the steps of:
comparing the third information which has been received with management information; and
verifying a validity of the third information when the comparing step determines that the information which has been received corresponds to the management information.

12. A method according to one of the preceding claims, further comprising the step of:
transmitting counter information (16) from the encoder to the decoder (12), after the step of transmitting the second information;
receiving the counter information (16) by the decoder (12);
comparing the counter information (16) which has been received with counter information (46) which has been previously stored in the decoder (12); and
prohibiting the execution of a command by the decoder (12) when the counter information (16) which has been received is not successive to the counter information (46) which has been previously stored.

13. A system for determining a key to be used for encrypting and decrypting information transmitted between an encoder and a decoder (10, 12), comprising:
a memory (22) for storing a key in the encoder (10) during manufacturing, the key being generated using first information, second information, and a key generation routine;
a memory (18; 20; 24) for storing the second information in the encoder (10);
a memory (42) for storing a key generation routine and the first information in the decoder (12) during manufacturing;
means for transmitting (11) the second information from encoder (10) to the decoder (12) during learning;
means for receiving (13) the second information by the decoder (12) during learning; and
means for calculating (42), during learning, a key in the decoder (12) using the second information which has been received, the first information which has been stored during manufacturing, and the key generation routine (42).

14. A system according to claim 13, wherein:
the encoder (10) is a transmitter and arranged for operating during the learning without receiving information from the decoder (12).

15. A system according to claim 13 or 14, wherein:
the decoder (12) is a receiver and arranged for operating during the learning without transmitting to the encoder (10).

16. A system according to one of the claims 13-15, wherein:
the memory (24) for storing the second information is arranged for storing the second information which is a serial number, and
the means for transmitting (11) the second information comprises means for transmitting the second information which is the serial number.

17. A system according to one of the claims 13-15, wherein:
the memory (20) for storing the second information is arranged for storing the second information which is a seed, and
the means for transmitting (11) the second information comprises means for transmitting the second information which is the seed.

18. A system according to one of the claims 13-15, wherein:
the memory (20) for storing the second information is arranged for storing the second information which is a randomly generated seed, and
the means for transmitting (11) the second information comprises means for transmitting the second information which is the randomly generated seed.

19. A system according to one of the claims 13-15, wherein:
the memory (18) for storing the second information is arranged for storing the second information which is information derived from applying the key and an algorithm to an input value, and
the means for transmitting the second information is arranged for transmitting the second information which is the information derived from applying the key and an algorithm to an input value.

20. A system according to one of the claims 13-19, wherein:
the memory (40) for storing the first information in the decoder (12) during manufacturing is arranged for storing the first information which is a manufacturer's master key; and
the means for calculating the key (42) in the decoder (12) is arranged for using the first information which is the manufacturer's master key.

21. A system according to one of the claims 13-15, further comprising:
a memory (16), in the encoder, for storing third information which is different from the second information stored during manufacturing,
wherein the means for transmitting (11) the second information further comprises means for transmitting the third information from the encoder to the decoder (12) during learning, and wherein the means for receiving (13) the second information comprises means for receiving and a memory for storing the third information during learning.

22. A system according to claim 20, further comprising:
means for encoding (18) information by the encoder (10) using the key stored therein;
means for transmitting (11) the third information and the information encoded by the encoder;
means for receiving (13), by the decoder (12), the third information and the information encoded by the encoder (10);
means for comparing (36), by the decoder (12), the third information which was transmitted with the information encoded by the encoder with the third information stored during learning;
means for decoding (34), by the decoder (12), the encoded information; and
means for executing a function (38) which corresponds to the encoded information which has been decoded, only when the means for comparing determines that the third information which was transmitted with the information encoded by the encoder corresponds to the third information stored during learning.

23. A system according to claim 20, further comprising:
means for comparing (36) the third information which has been received with management information; and
means for verifying a validity of the third information when the means for comparing determines that the information which has been received corresponds to the management information.

24. A system according to one of the claims 13-23, further comprising:
means for transmitting counter information (16, 11) from the encoder (10) to the decoder (12), after transmitting the second information;
means for receiving the counter information (13, 36) by the decoder (12);
means for comparing (36) the counter information which has been received with counter information which has been previously stored in the decoder (12); and
means for prohibiting the execution (38) of a command by the decoder (12) when the counter information which has been received is not successive to the counter information which has been previously stored.

## Patentansprüche

1. Verfahren zum Ermitteln eines Schlüssels zur Verwendung für das Verschlüsseln und das Entschlüsseln von Informationen, die zwischen einem Kodierer und einem Dekodierer (10, 12) übertragen werden, das folgende Schritten beinhaltet:
Speichern des Schlüssels (22) in dem Kodierer (10) während der Herstellung, wobei der Schlüssel (22) unter Benutzung einer ersten Information, einer zweiten Information und einer Schlüsselerzeugungsroutine erzeugt wird;
Abspeichern der zweiten Information in dem Kodierer; Abspeichern der Schlüsselerzeugungsroutine und der ersten Information in dem Dekodierer (12) während der Herstellung; Senden der zweiten Information vom Kodierer (10) zum Dekodierer (12) während des Lernens;
Empfangen der zweiten Information von dem Dekodierer (12) während des Lernens; und
Berechnen, während des Lernens, eines Schlüssels (44) in dem Dekodierer unter Benutzung der zweiten Information, die empfangen wurde, der ersten Information, die während der Herstellung abgespeichert wurde, und der Schlüsselerzeugungsroutine.

2. Ein Verfahren nach Anspruch 1, wobei
der Kodierer (10) ein Sender ist und während des Lernens im Betrieb ist, ohne einen Schritt des Empfangens von Informationen vom Dekodierer durchzuführen.

3. Ein Verfahren nach Anspruch 1 oder 2, wobei
der Dekodierer (12) ein Empfänger ist und während des Lernens im Betrieb ist, ohne einen Schritt des Sendens an den Kodierer durchzuführen.

4. Ein Verfahren nach einem der vorhergehenden Ansprüche,
wobei
der Schritt des Speicherns der zweiten Information das Speichern der zweiten Information, die eine Seriennummer (24) ist, beinhaltet und
der Schritt des Sendens der zweiten Information das Senden der zweiten Information, die eine Seriennummer (24) ist, beinhaltet.

5. Verfahren nach einem der Ansprüche 1 bis 3, wobei
der Schritt des Speicherns der zweiten Information das Abspeichern der zweiten Information, die ein Startparameter (20) ist, beinhaltet und
der Schritt des Sendens der zweiten Information das Übertagen der zweiten Information, die ein Startparameter (20) ist, beinhaltet.

6. Verfahren nach einem der Ansprüche 1 bis 3, wobei
der Schritt des Speicherns der zweiten Information das Speichern der zweiten Information, die ein zufällig generierter Startparameter (20) ist, beinhaltet und
der Schritt des Sendens der zweiten Information das Senden der zweiten Information, die ein zufällig generierter Startparameter (20) ist, beinhaltet.

7. Ein Verfahren nach einem der Ansprüche 1 bis 3, wobei
der Schritt des Speicherns der zweiten Information das Speichern der zweiten Information, die eine dadurch erzeugte Information ist, dass der Schlüssel (22) und ein Algorithmus auf einen Eingangswert angewendet werden, beinhaltet und
der Schritt des Sendens der zweiten Information das Senden der zweiten Information, die eine dadurch erzeugte Information ist, dass der Schlüssel (22) und der Algorithmus auf einem Eingangswert angewendet werden, beinhaltet.

8. Verfahren nach einem der vorhergehenden Ansprüche, wobei der Schritt des Speicherns der ersten Information in dem Dekodierer während der Herstellung das Speichern der ersten Information, die ein Hauptschlüssel (40) des Herstellers ist, beinhaltet; und
der Schritt des Berechnens des Schlüssels (44) in dem Dekodierer die erste Information, die der Hauptschlüssel (40) des Herstellers ist, nutzt.

9. Verfahren nach einem der vorhergehenden Ansprüche, zusätzlich die folgenden Schritte beinhaltend:
Speichern der dritten Information in dem Kodierer, die sich von der zweiten Information, die während der Herstellung gespeichert wurde, unterscheidet,
wobei der Schritt des Sendens zweiten Information weiterhin das Senden der dritten Information von dem Kodierer zu dem Dekodierer während des Lernens beinhaltet, und
wobei der Schritt des Empfangens der zweiten Information das Empfangen und Speichern der dritten Information während des Lernens beinhaltet.

10. Verfahren nach Anspruch 9,
das weiterhin die folgenden Schritte, die nach dem Schritt des Berechnens des Schlüssels in dem Dekodierer durchgeführt werden, beinhaltet;
Kodieren der Information durch den Kodierer (10) unter Benutzung des in ihm gespeicherten Schlüssels (22);
Senden der dritten Information und der Information, die durch den Kodierer (10) kodiert wurde;
Empfangen, durch den Dekodierer (12), der dritten Information und der Information, die von dem Kodierer (10) kodiert wurde;
Vergleichen, durch den Dekodierer (12), der dritten Information, die mit der Information, die von dem Kodierer (10) kodiert wurde, übertragen wurde, mit der dritten Information, die während des Lernens gespeichert wurde; Dekodieren, durch den Dekodierer (12), der kodierten Information; und
Ausführung einer Funktion, die sich auf die kodierte Information, die dekodiert wurde, bezieht, nur wenn der Schritt des Vergleiches ergibt, dass die dritte Information, die mit der Information übertragen wurde, die durch den Kodierer (10) kodiert wurde, der dritten Information, die während des Lernens gespeichert wurde, entspricht.

11. Verfahren nach Anspruch 10, zusätzlich die folgenden Schritte beinhaltend:
Vergleich in der dritten Information, die empfangen wurde, mit der Managementinformation; und
Überprüfen der Gültigkeit der dritten Information, wenn der Vergleichsschritt ergibt, dass die Information, die empfangen wurde, der Managementinformation entspricht.

12. Verfahren nach einem der vorhergehenden Ansprüche, zusätzlich die folgenden Schritte beinhaltend:
Übertagen der Zählerinformation (12) von dem Kodierer an den Dekodierer nach dem Schritt des Sendens der zweiten Information;
Empfangen der Zählerinformation (16) durch den Dekodierer (12);
Vergleichen der Zählerinformation (16), die empfangen wurde, mit der Zählerinformation (46), die vorher in dem Dekodierer (12) gespeichert wurde; und
Verhindern der Ausführung eines Kommandos durch den Dekedierer (12), wenn die Zählerinformation (16), die empfangen wurde, nicht fortlaufend zu der Zählerinformationen (46), die vorher gespeichert wurde, ist.

13. System zum Ermitteln eines Schlüssels zur Verwendung für das Verschlüsseln und das Entschlüsseln von Informationen, die zwischen einem Kodierer und einem Dekodierer (10, 12) übertragen werden, das folgendes beinhaltet:
ein Speicher (22) zum Speichern eines Schlüssels in dem Kodierer (10) während der Herstellung, wobei der Schlüssel unter Verwendung einer ersten Information, einer zweiten Information und einer Schlüsselgenerierungsroutine erzeugt wird;
ein Speicher (18; 20; 24) zum Speichern der zweiten Information in dem Kodierer (10);
ein Speicher (42) zum Speichern einer Schlüsselgenerierungsroutine und der ersten Information in dem Dekodierer (12) während der Herstellung;
Mittel zum Empfangen (13) der zweiten Information durch den Dekodierer (12) während des Lernens; und
Mittel zum Berechnen (42), während des Lernens, eines Schlüssels in dem Dekodierer (12) unter Verwendung der zweiten Information, die empfangen wurde, der ersten Information, die während der Herstellung gespeichert wurde, und der Schlüsselerzeugungsroutine (42).

14. System nach Anspruch 13, wobei
der Kodierer (10) ein Sender und so ausgeführt ist, dass er während des Lernens in Betrieb ist, ohne Informationen vom Dekodierer (12) zu empfangen.

15. System nach einem der Ansprüche 13 oder 14, wobei
der Dekodierer (12) ein Empfänger und so aus geführt ist, dass er während des Lernens in Betrieb ist, ohne an den Empfänger (10) zu senden.

16. System nach einem der Ansprüche 13 bis 15, wobei
der Speicher (24) zum Speichern der zweiten Information so ausgeführt ist, dass er zum Speichern der zweiten Information, die eine Seriennummer ist, dient, und
die Mittel zum Senden (11) der zweiten Information Mittel zum Senden der zweiten Information, die eine Seriennummer ist, beinhalten.

17. System nach einem der Ansprüche 13 bis 15, wobei
der Speicher (20) zum Speichern der zweiten Information so ausgeführt ist, dass er zum Speichern der zweiten Information, die ein Startparameter ist, dient, und
die Mittel zum Senden (11) der zweiten Information Mittel zum Senden der zweiten Information, die ein Startparameter ist, beinhalten.

18. Ein System nach einem der Ansprüche 13 bis 15, wobei
der Speicher (20) zum Speichern der zweiten Information so ausgeführt ist, dass er zum Speichern der zweiten Information, die ein zufällig erzeugter Startparameter ist, dient, und
die Mittel zum Senden der zweiten Information Mittel zum Übermitteln der zweiten Information, die ein zufällig generierter Startparameter ist, beinhalten.

19. System nach einem der Ansprüche 13 bis 15, wobei
der Speicher (18) zum Speichern der zweiten Information so ausgeführt ist, dass er zum Speichern der zweiten Information, die eine dadurch erzeugte Information ist, dass ein Schlüssel und ein Algorithmus auf einen Eingangswert angewendet werden, dient, und
die Mittel zum Senden der zweiten Information Mittel zum Senden der zweiten Information, die eine dadurch erzeugte Information ist, dass ein Schlüssel und ein Algorithmus auf einem Eingangswert angewendet werden, beinhalten.

20. System nach einem der Ansprüche 13 bis 19, wobei
der Speicher (40) zum Speichern der ersten Information in dem Dekodierer (12) während der Herstellung so ausgeführt ist, dass er zum Speichern der ersten Information, die ein Hauptschlüssel des Herstellers ist, dient; und
die Mittel zum Berechnen des Schlüssels (42) in dem Dekodierer (12) so ausgeführt sind, das sie die erste Information, die ein Hauptschlüssel des Herstellers ist, verwenden.

21. System nach einem der Ansprüche 13 bis 15, zusätzlich folgendes beinhaltend:
ein Speicher (16) in dem Kodierer zum Speichern der dritten Information, die unterschiedlich von der zweiten Information, die während der Herstellung gespeichert wurde, ist,
wobei die Mittel zum Senden (11) der zweiten Information weiterhin Mittel zum Senden der dritten Information vom Kodierer zum Dekodierer (12) während des Lernens beinhalten, und
wobei die Mittel zum Empfangen (13) der zweiten Information Mittel zum Empfangen und einen Speicher zum Speichern der dritten Information während des Lernens beinhalten.

22. System nach Anspruch 20, zusätzlich folgendes beinhaltend:
Mittel zum Kodieren (18) von Informationen durch den Kodierer (10) unter Benutzung eines darin gespeicherten Schlüssels;
Mittel zum Senden (11) der dritten Information und der Information, die von dem Kodierer kodiert wurde;
Mittel zum Empfangen (13) durch den Dekodierer (12) der dritten Information und der Information, die von dem Kodierer (10) kodiert wurde;
Mittel zum Vergleichen (36), durch den Dekodierer (12), der dritten Information, die mit der Information, die von dem Kodierer kodiert wurde, übertragen wurde, mit der dritten Information, die während des Lernens gespeichert wurde;
Mittel zum Dekodieren (34), durch den Dekodierer (12), der kodierten Information; und
Mittel zum Ausführen einer Funktion (38), die sich auf die kodierte Information, die kodiert wurde, bezieht, nur wenn die Mittel für das Vergleichen ergeben, dass die dritte Information, die damit der Information, die von dem Kodierer kodiert wurde, übertragen wurde, mit der dritten Information, die während des Lernens gespeichert wurde, übereinstimmt.

23. System nach Anspruch 20, zusätzlich folgendes beinhaltend:
Mittel zum Vergleichen (36) der dritten Information, die empfangen wurde, mit der Managementinformation; und
Mittel zum Überprüfen der Gültigkeit der dritten Information, wenn die Mittel für das Vergleichen ergeben, dass die Information, die empfangen wurde, mit der Managementinformation übereinstimmt.

24. System nach einem der Ansprüche 13 bis 23, zusätzlich folgendes beinhaltend:
Mittel zum Senden der Zählerinformation (16, 11) von dem Kodierer (10) zu dem Dekodierer (12) nach dem Senden der zweiten Information;
Mittel zum Empfangen der Zählerinformation (13, 36) durch den Dekoder (12);
Mittel zum Vergleichen (36) der Zählerinformation, die empfangen wurde mit der Zählerinformation, die vorher in dem Dekodierer (12) gespeichert wurde; und
Mittel zum Verhindern der Ausführungen (38) eines Kommandos durch den Dekodierer (12), wenn die Zählerinformation, die empfangen wurde, nicht fortlaufend zu der Zählerinformation, die vorher gespeichert wurde, ist.

## Revendications

1. Procédé pour déterminer une clé destinée à être utiliser pour crypter et décrypter des informations transmises entre un codeur et un décodeur (10, 12), comprenant les étapes de:
mémoriser une clé (22) dans le codeur (10) pendant la fabrication, la clé (22) étant engendrée en utilisant une première information, une deuxième information et une routine de génération de clé;
mémoriser la deuxième information dans le codeur;
mémoriser une routine de génération de clé et la première information dans le décodeur (12) pendant la fabrication;
transmettre la deuxième information depuis le codeur (10) vers le décodeur (12) pendant l'apprentissage;
recevoir la deuxième information par le décodeur (12) pendant l'apprentissage; et
calculer, pendant l'apprentissage, une clé (44) dans le décodeur en utilisant la deuxième information qui a été reçue, la première informations qui a été mémorisée pendant la fabrication et la routine de génération de clé.

2. Procédé selon la revendication 1, dans lequel:
le codeur (10) est un émetteur et fonctionne pendant l'apprentissage sans exécuter d'étape de réception d'informations depuis le décodeur.

3. Procédé selon la revendication 1 ou 2, dans lequel:
le décodeur (12) est un récepteur et fonctionne pendant l'apprentissage sans exécuter d'étape de transmission d'informations vers le codeur

4. Procédé selon l'une des revendications précédentes, dans lequel:
l'étape de mémorisation de la deuxième information comprend la mémorisation de la deuxième information qui est un numéro de série (24), et
l'étape de transmission de la deuxième information comprend la transmission de la deuxième information qui est le numéro de série (24).

5. Procédé selon l'une des revendications 1 à 3, dans lequel:
l'étape de mémorisation de la deuxième information comprend la mémorisation de la deuxième information qui est une valeur de départ (20), et
l'étape de transmission de la deuxième information comprend la transmission de la deuxième information qui est la valeur de départ (20).

6. Procédé selon l'une des revendications 1 à 3, dans lequel:
l'étape de mémorisation de la deuxième information comprend la mémorisation de la deuxième information qui est une valeur de départ engendrée de manière aléatoire (20), et
l'étape de transmission de la deuxième information comprend la transmission de la deuxième information qui est la valeur de départ engendrée de manière aléatoire (20).

7. Procédé selon l'une des revendications 1 à 3, dans lequel:
l'étape de mémorisation de la deuxième information comprend la mémorisation de la deuxième information qui est une information dérivée de l'application de la clé (22) et d'un algorithme à une valeur d'entrée, et
l'étape de transmission de la deuxième information comprend la transmission de la deuxième information qui est l'information dérivée de l'application de la clé (22) et le l'algorithme à une valeur d'entrée.

8. Procédé selon l'une des revendications précédentes, dans lequel:
l'étape de mémorisation de la première information dans le décodeur pendant la fabrication comprend la mémorisation de la première information qui est une clé maîtresse (40) du fabricant; et
dans lequel l'étape de calcul de la clé (44) dans le décodeur utilise la première information qui est la clé maîtresse (40) du fabricant.

9. Procédé selon l'une des revendications précédentes, comprenant en outre l'étape de:
mémoriser une troisième information dans le codeur, qui est différente de la deuxième information mémorisée pendant la fabrication,
dans lequel l'étape de transmission de la deuxième information comprend en outre la transmission de la troisième information du codeur vers le décodeur pendant l'apprentissage, et
dans lequel l'étape de réception de la deuxième information comprend la réception et la mémorisation de la troisième information pendant l'apprentissage.

10. Procédé selon la revendication 9, comprenant en outre, exécutées après l'étape de calcul de la clé dans le décodeur, les étapes de:
coder des informations via le codeur (10) en utilisant la clé (22) qui est mémorisée dans celui-ci;
transmettre la troisième information et les informations codées par le codeur (10);
recevoir, via le décodeur (12), la troisième information et les informations codées par le codeur (10);
comparer, via le décodeur (12), la troisième information qui a été transmise avec les informations codées par le codeur (10) avec la troisième information mémorisée pendant l'apprentissage;
décoder, via le décodeur (12), les informations codées; et
exécuter une fonction qui correspond aux informations codées qui ont été décodées, seulement quand l'étape de comparaison détermine que la troisième information qui a été transmise avec les informations codées par le codeur (10) correspond à la troisième information mémorisée pendant l'apprentissage.

11. Procédé selon la revendication 10, comprenant en outre les étapes de:
comparer la troisième information qui a été reçue avec des informations de gestion; et
vérifier une validité de la troisième information quand l'étape de comparaison détermine que les informations qui ont été reçues correspondent aux informations de gestion.

12. Procédé selon l'une quelconque des revendications précédentes, comprenant en outre l'étape de:
transmettre une information de compteur (16) à partir du codeur vers le décodeur (12), après l'étape de transmission de la deuxième information;
recevoir l'information de compteur (16) par le décodeur (12);
comparer l'information de compteur (16) qui a été reçue avec l'information de compteur (46) qui a été mémorisée précédemment dans le décodeur (12); et
interdire l'exécution d'une commande par le décodeur (12) quand l'information de compteur (16) qui a été reçue n'est pas successive à l'information de compteur (46) qui a été mémorisée précédemment.

13. Système pour déterminer une clé destinée à être utiliser pour crypter et décrypter des informations transmises entre un codeur et un décodeur (10, 12), comprenant:
une mémoire (22) pour mémoriser une clé dans le codeur (10) pendant la fabrication, la clé étant engendrée en utilisant une première information, une deuxième information et une routine de génération de clé;
une mémoire (18; 20; 24) pour mémoriser la deuxième information dans le codeur (10);
une mémoire (42) pour mémoriser une routine de génération de clé et la première information dans le décodeur (12) pendant la fabrication;
des moyens (11) pour transmettre la deuxième information depuis le codeur (10) vers le décodeur (12) pendant l'apprentissage;
des moyens (13) pour recevoir la deuxième information par le décodeur (12) pendant l'apprentissage; et
des moyens (42) pour calculer, pendant l'apprentissage, une clé dans le décodeur (12) en utilisant la deuxième information qui a été reçue, la première information qui a été mémorisée pendant la fabrication et la routine de génération de clé (42).

14. Système selon la revendication 13, dans lequel:
le codeur (10) est un émetteur et est agencé pour fonctionner pendant l'apprentissage sans recevoir d'informations depuis le décodeur (12).

15. Système selon la revendication 13 ou 14, dans lequel:
le décodeur (12) est un récepteur et est agencé pour fonctionner pendant l'apprentissage sans transmission vers le codeur (10).

16. Système selon l'une des revendications 13 à 15, dans lequel:
la mémoire (24) pour mémoriser la deuxième information est agencée pour mémoriser la deuxième information qui est un numéro de série, et
les moyens (11) pour transmettre la deuxième information comprennent des moyens pour transmettre la deuxième information qui est le numéro de série.

17. Système selon l'une des revendications 13 à 15, dans lequel:
la mémoire (20) pour mémoriser la deuxième information est agencée pour mémoriser la deuxième information qui est une valeur de départ, et
les moyens (11) pour transmettre la deuxième information comprennent des moyens pour transmettre la deuxième information qui est la valeur de départ.

18. Système selon l'une des revendications 13 à 15, dans lequel:
la mémoire (20) pour mémoriser la deuxième information est agencée pour mémoriser la deuxième information qui est une valeur de départ engendrée de manière aléatoire, et
les moyens (11) pour transmettre la deuxième information comprennent des moyens pour transmettre la deuxième information qui est la valeur de départ engendrée de manière aléatoire.

19. Système selon l'une des revendications 13 à 15, dans lequel:
la mémoire (18) pour mémoriser la deuxième information est agencée pour mémoriser la deuxième information qui est une information dérivée de l'application de la clé et d'un algorithme à une valeur d'entrée, et
les moyens pour transmettre la deuxième information sont agencés pour transmettre la deuxième information qui est l'information dérivée de l'application de la clé et d'un algorithme à une valeur d'entrée.

20. Système selon l'une des revendications 13 à 19, dans lequel:
la mémoire (40) pour mémoriser la première information dans le décodeur (12) pendant la fabrication est agencée pour mémoriser la première information qui est une clé maîtresse du fabricant; et
les moyens pour calculer la clé (42) dans le décodeur (12) sont agencés pour utiliser la première information qui est la clé maîtresse du fabricant.

21. Système selon l'une des revendications 13 à 15, comprenant en outre:
une mémoire (16), dans le codeur, pour mémoriser la troisième information qui est différente de la deuxième information mémorisée pendant la fabrication,
dans lequel les moyens (11) pour transmettre la deuxième information comprennent en outre des moyens pour transmettre la troisième information du codeur vers le décodeur (12) pendant l'apprentissage, et
dans lequel les moyens (13) pour recevoir la deuxième information comprennent des moyens pour recevoir et une mémoire pour mémoriser la troisième information pendant l'apprentissage.

22. Système selon la revendication 20, comprenant en outre:
des moyens (18) pour coder des informations via le codeur (10) en utilisant la clé qui est mémorisée dans celui-ci;
des moyens (11) pour transmettre la troisième information et les informations codées par le codeur;
des moyens (13) pour recevoir, via le décodeur (12), la troisième information et les informations codées par le codeur (10);
des moyens (36) pour comparer, via le décodeur (12), la troisième information qui a été transmise avec les informations codées par le codeur avec la troisième information mémorisée pendant l'apprentissage,
des moyens (34) pour décoder, via le décodeur (12), les informations codées; et
des moyens (38) pour exécuter une fonction qui correspond aux informations codées qui ont été décodées, seulement quand les moyens pour comparer déterminent que la troisième information a été transmise avec les informations codées par le codeur correspond à la troisième information mémorisée pendant l'apprentissage.

23. Système selon la revendication 20, comprenant en outre:
des moyens (36) pour comparer la troisième information qui a été reçue avec des informations de gestion; et
des moyens pour vérifier une validité de la troisième information quand les moyens pour comparer déterminent que les informations qui ont été reçues correspondent aux informations de gestion.

24. Système selon l'une des revendications 13 à 23, comprenant en outre:
des moyens pour transmettre une information de compteur (16, 11) à partir du codeur (10) vers le décodeur (12), après la transmission de la deuxième information;
des moyens pour recevoir l'information de compteur (13, 36) par le décodeur (12);
des moyens (36) pour comparer l'information de compteur qui a été reçue avec l'information de compteur qui a été mémorisée précédemment dans le décodeur (12); et
des moyens (38) pour interdire l'exécution d'une commande par le décodeur (12) quand l'information de compteur qui a été reçue n'est pas successive à l'information de compteur qui a été mémorisée précédemment.
